# EUROPEAN PATENT APPLICATION

(11) **EP 1 580 583 A1**
(43) Date of publication of application: **28.09.2005**
(21) Application number: 04017963.2
(22) Date of filing: 29.07.2004
(51) Int. Cl.: G02B 6/35

(54) **Controlling apparatus and controlling method for spatial optical switch**

(30) Priority: 25.03.2004 JP 2004089621
(71) Applicant: FUJITSU LIMITED, Kanagawa 211-8588 (JP)
(72) Inventor: Sakai, Yoshio, Fujitsu Limited, Kawasaki-shi Kanagawa 211-8588 (JP); Mori, Kazuyuki, Fujitsu Limited, Kawasaki-shi Kanagawa 211-8588 (JP)
(74) Representative: HOFFMANN EITLE

(57) **Abstract**

A controlling apparatus (5) for a spatial optical switch having a deflecting means (2) which has two or more deflection axes, and controls deflection angles around deflection axes to deflect an optical path of an input light beam from any one of a plurality of input ports between the plural input ports and a plurality of output ports, and outputs the input light beam to any one of the plural output ports. The controlling apparatus (5) comprises an optical detecting means (6) for detecting an output optical level from the output port in order to control the output optical level of the spatial optical switch at a high resolution, and a controlling means (7) for controlling the output optical level detected by the optical detecting means (6) to a desired output optical level by controlling a deflection angle around one deflection axis of the deflection means (2), then controlling a deflection angle about another deflection axis of the deflecting means (2).

## Description

### BACKGROUND OF THE INVENTION

### 1) Field of the Invention

The present invention relates to a controlling apparatus and a controlling method for a spatial optical switch suitable for use in an optical cross-connect (OXC) system or the like in a basic optical network in a wavelength division multiplexing (WDM) system, for example.

### 2) Description of Related Art

One of prominent means for building a large-capacity optical communication network is wavelength division multiplexing (WDM) system, traffic of which is explosively increased with tremendous spread of the Internet in these years.

A general optical cross-connect (OXC) device as being a basic optical network in the WDM system is configured by connecting a plurality of optical signal exchanges one another through optical fibers. When inputted wavelength-division-multiplexed optical signals through an optical fiber, the optical signal exchange can switch the route of an optical signal on a per-wavelength basis, and can wavelength-multiplex optical signals on the same route and transmits the same.

When a fault occurs in an optical fiber configuring a certain communication route, the optical cross-connect device can, instantaneously and automatically, set a detour to a stand-by optical fiber or an optical fiber on another route to restore the system at high speed. Additionally, the optical cross-connect device can edit an optical path for each wavelength.

As an optical switching device applied to such optical cross-connect device, there is a special optical switch having a three-dimensional tilt mirror (refer to, for example, Patent Document 1 to be described later). The spatial optical switch can vary the reflection angle of an incident light beam from any one of input ports to change its route, and output the beam to any one of output ports. Some spatial optical switches use, for example, MEMS (Micro Electro-Mechanical Systems) technique.

Generally, a signal (beam) exchanged by the optical cross-connect device as above is wavelength-multiplexed with beams at other wavelengths, then inputted to a required optical amplifier such as an EDFA (Erbium Doped Fiber Amplifier) or the like in order to increase its optical level (optical power). The optical amplifier has a characteristic that the optical amplifier generally provides a higher gain when the input beam has a higher power, while providing a lower gain when the input power has a lower power. For this, when a WDM beam whose wavelengths have variation in optical level is inputted to such optical amplifier, the variation in optical power of the wavelengths becomes larger than before, thus a beam having a low input optical power is not sufficiently amplified to a desired level, which causes a problem that the beam cannot be normally received on the receiver's side.

To overcome this disadvantage, there has been proposed, for example, a technique that a VOA (Variable Optical Attenuator) is disposed between the optical cross-connect device and the optical amplifier to attenuate the higher optical level of a wavelength of a beam among beams outputted from the optical cross-connect device, thereby equalizing the optical levels of wavelengths of the beams inputted to the optical amplifier. By equalizing the optical levels of all wavelengths of the WDM beam under control using VOA before the WDM beam is inputted to the optical amplifier, it becomes possible to uniformly amplify the beams at all wavelengths in the WDM beam by the optical amplifier.

However, adopting the VOA causes an increase in size and manufacturing cost of the optical cross-connect device because it is necessary to dispose the VOA for each of all wavelengths of the WDM beam inputted to the optical cross-connect device.

To overcome this problem, there has been proposed a technique that the VOA function is provided to an optical switching device (special optical switch) using the above-described three-dimensional tilt mirror (hereinafter referred to as a three-dimensional MEMS mirror, occasionally). Namely, since the spatial optical switch can vary the surface direction of the tilt mirror to control the light quantity of the input beam to be coupled to the optical output port, the spatial optical switch realizes both the VOA function and the optical switching function without necessity of providing the VOA for each of wavelengths. The quantity of a beam at a higher wavelength having a higher optical level in the WDM beam outputted from the optical cross-connect device to be coupled to the optical output port is controlled to be decreased, whereby the levels can be equalized under control like the above example.

### [Patent Document 1] Japanese Patent Laid-Open No. HEI 9-127439

Meanwhile, it is desirable that the optical levels of wavelengths of beams (optical signals) outputted from the optical switching device (that is, inputted to the optical amplifier) are equalized within an error range of about 0.1 (dB), for example. Therefore, it is desirable that the output beam level at each wavelength with a precision of at least a resolution of 0.1 (dB).

However, since the technique of providing the VOA function to the optical switching device (spatial optical switch) mechanically controls the deflection angle of the tilt mirror, it is difficult to finely adjust the output beam level at each wavelength, and difficult to equalize the optical levels at all wavelengths with a precision of within an error range of about 0.1 (dB) .

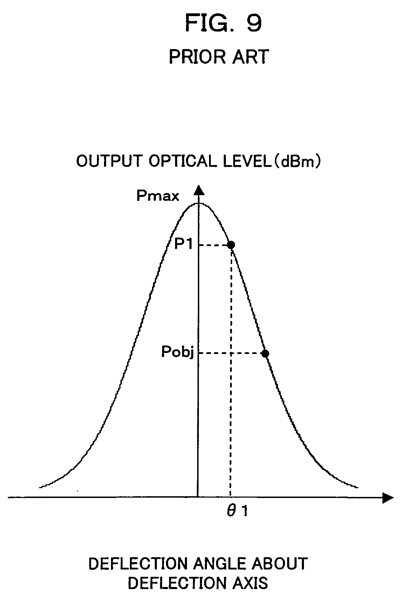

As shown in FIG. 9, for example, a relationship between the deflection angle about the deflection axis (axis of rotation) of the tilt mirror and the output beam level can be represented by a Gaussian distribution curve. When the deflection angle about the deflection axis becomes larger than a certain degree (for example, not less than θ1 in FIG. 9) , the output beam level is abruptly changed only by changing a very little the deflection angle.

When the output beam level is attenuated from Pmax to Pobj (Pobj < P1), for example, the output beam level can be adjusted relatively finely down to the output optical level P1 (deflection angle *θ* 1) because the sensitivity of output beam level change to the deflection control quantity is low down to the output beam level P1. However, below the output beam level P1, it is extremely difficult to adjust the output beam level at a high resolution of about 0.1 dB because the sensitivity of output beam level change to the deflection control quantity is high.

As a result, it becomes difficult to realize the output optical level Pobj with high precision, which makes it almost impossible to put the optical level error of wavelengths of beams outputted from the optical switching device (spatial optical switch) within 0.1 (dB).

### SUMMARY OF THE INVENTION

In the light of the above problems, an object of the present invention is to provide a controlling apparatus and a controlling method for a spatial optical switch, which can control an output optical level of the spatial optical switch at a high solution.

To attain the above object, the present invention provides a controlling apparatus for a spatial optical switch comprising a deflecting means which has not less than two deflection axes, and controls deflection angles about the deflection axes to deflect an optical path of an input light beam from any one of a plurality of input ports between the plural input ports and a plurality of output ports, and outputs the input light beam to any one of the plural output ports, the controlling apparatus comprising an optical detecting means for detecting an output optical level from the output port, and a controlling means for controlling the output optical level detected by the optical detecting means to be a desired output optical level by executing a first controlling of a deflection angle about one of the deflection axes of the deflecting means and a second controlling of a deflection angle about another deflection axis of the deflecting means after the first controlling.

The present invention further provides a controlling apparatus for a spatial optical switch comprising a plurality of deflecting means each of which has not less than one deflection axis, and controls deflection angles about the deflection axes of the plural deflecting means to deflect an optical path of an input light beam from any one of a plurality of input ports between the plural input ports and a plurality of output ports and outputs the input light beam to any one of the plural output ports, the controlling apparatus comprising an optical detecting means for detecting an output optical level from the output port, and a controlling means for controlling the output optical level detected by the optical detecting means to be a desired output optical level by executing a first controlling of a deflection angle about a deflection axis of any one of the plural deflecting means, and a second controlling of a deflection angle about another deflection axis other than the former deflection axis after the first controlling.

It is preferable that the controlling means comprises a rough adjustment unit for controlling the former deflection axis so that the output optical level detected by the optical detecting means is within an allowable range of a predetermined target level, and a fine adjustment unit for controlling the latter deflection axis after the control by the rough adjustment unit so that the output optical level detected by the optical detecting means is the target level.

Further, it is desirable that the deflecting means comprises a tilt mirror having rotation axes perpendicular to each other as the deflection axes.

The present invention still further provides a method for controlling a spatial optical switch comprising a deflecting means which has not less than two deflection axes, and controls deflection angles about the deflection axes to deflect an optical path of an input light beam from any one of a plurality of input ports between the plural input ports and a plurality of output ports, and outputs the input light beam to any one of the plural output ports, the method comprising the steps of firstly controlling a deflection angle about one of the deflection axes of the deflecting means, and secondly controlling a deflection angle about another deflection axis of the deflecting means, an output optical level outputted from the output port being thereby controlled to a desired output optical level.

The present invention still further provides a method for controlling a spatial optical switch comprising a plurality of deflecting means each of which has not less than one deflection axis and controls deflection angles about the deflection axes of the plural deflecting means to deflect an optical path of an input light beam from any one of a plurality of input ports between the plural input ports and a plurality of output ports and outputs the input light beam to any one of the plural output ports, the method comprising the steps of firstly controlling a deflection angle about a deflection axis of any one of the deflecting means, and secondly controlling a deflection angle about another deflection axis other than the former deflection axis, an output optical level outputted from the output port being thereby controlled to a desired output optical level.

It is preferable that a rough adjustment control is executed on the former deflection axis so that the output optical level is within an allowable range of a predetermined target level, a fine adjustment control is then executed on the latter deflection axis so that the output optical level is the target level.

According to this invention, a deflection angle about one deflection axis of the deflecting means is controlled, a deflection angle of another deflection axis of the deflection means is then controlled to control the output optical level to a desired output optical level, so that the output optical level of the spatial optical switch can be controlled at a high resolution.

On this occasion, a control (rough adjustment; first controlling) is carried out on the former deflection axis so that the output optical level is within an allowable range of a predetermined target level, then a control (fine adjustment; second controlling) is carried out on the latter deflection axis so that the output optical level is the target level, for example. This can provide the above effects more certainly.

### BRIEF DESCRIPTION OF THE DRAWINGS

FIG. 1 is a block diagram showing a structure of a controlling apparatus for a spatial optical switch according to an embodiment of this invention;
FIG. 2 is a diagram typically showing an essential part of a spatial optical switch to which the controlling apparatus for a spatial optical switch according to the embodiment of this invention is applied;
FIG. 3 is a perspective view typically showing a tilt mirror (micro mirror unit) applied to the spatial optical switch shown in FIGS. 1 and 2;
FIG. 4 is a flowchart for illustrating a spatial optical switch controlling method (two axes control) according to the embodiment of this invention;
FIG. 5 is a diagram showing an example of the relationship (Gaussian distribution) between output optical level and deflection control quantity varied according to the spatial optical switch controlling method according to the embodiment of this invention;
FIG. 6 is a flowchart for illustrating a spatial optical switch controlling method (three axes control) according to a modification of this invention;
FIG. 7 is a diagram showing an example of the relationship (Gaussian distribution) between output optical level and deflection control quantity varied in the spatial optical switch controlling method according to the modification of this invention;
FIG. 8 is a plan view showing an essential part of a spatial optical switch to which the special optical switch controlling method according to the modification of this invention is applied; and
FIG. 9 is a diagram showing an example of the relationship (Gaussian distribution) between output optical level and deflection angle about a deflection axis.

### DESCRIPTION OF THE PREFERRED EMBODIMENTS

Hereinafter, description will be made of embodiments of the present invention with reference to the accompanying drawings.

### [1] Description of an Embodiment of the Invention

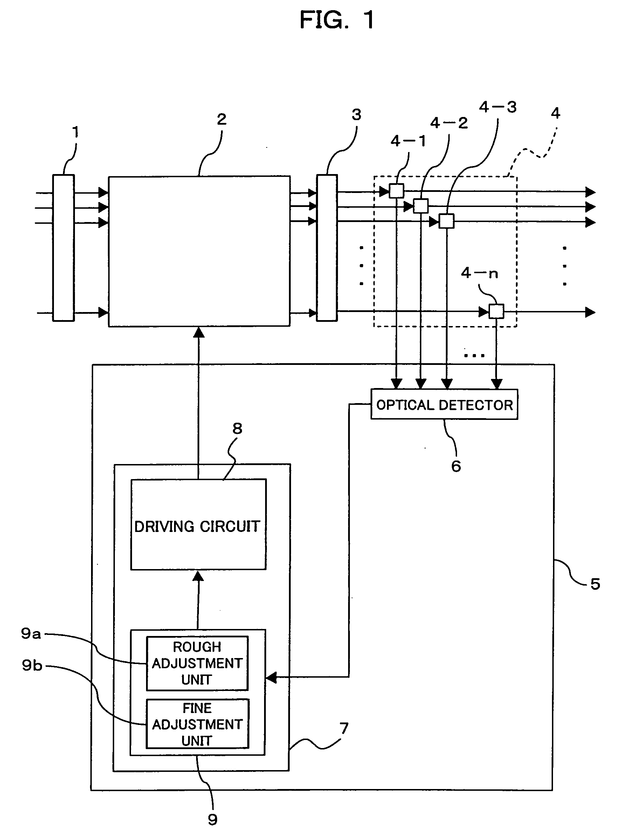

FIG. 1 is a block diagram showing a structure of a controlling apparatus for a spatial optical switch according to an embodiment of this invention. As shown in FIG. 1, the controlling apparatus 5 for a spatial optical switch according to this embodiment comprises an optical detector (optical detecting means) 6 and a controlling unit (controlling means) 7.

Aside from the controlling apparatus 5, an optical switching apparatus (special optical switch) comprises an input collimator array 1, a mirror array (deflecting means) 2, an output collimator array 3 and a coupler unit 4.

Meanwhile, when the optical switching apparatus comprised of the input collimator array 1, the mirror array 2, the output collimator array 3, the coupler unit 4 and the controlling apparatus 5 is applied to a basic optical network in WDM system, the optical switching apparatus can operate as not only an optical cross-connect device described above but also an optical ADM (Add Drop Multiplexing).

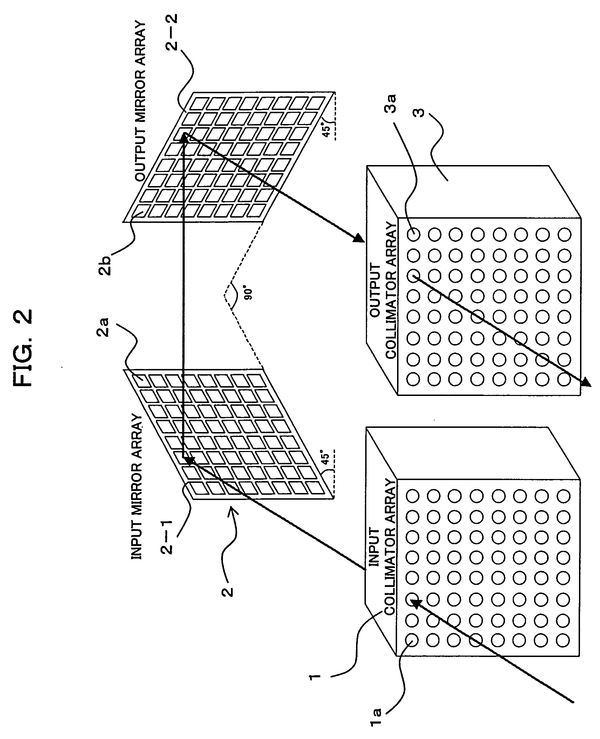

The input collimator array 1, the mirror array 2 and the output collimator array 3 together carry out optical switching to arbitrarily switch the output route of an inputted beam, which can be arranged as shown in FIG. 2, for example. As the input and output, there are separately provided collimator arrays 1 and 3. As the mirror array (deflecting means) 2, there are provided two mirror arrays (deflecting means) 2-1 and 2-2 for input and output.

In the input collimator array 1, there are two-dimensionally arranged (in array) input collimators 1a as N input ports to collimate input beams on N (N being an integer not less than two, being 8X8=64 in FIG. 2) channels whose routes are to be switched. For example, N input optical fibers in a bundle are aligned in array, beams (beams at respective wavelengths) from a connected input fiber block (not shown) are introduced into the input collimators 1a, respectively, and the collimated beams are outputted to the input mirror array 2-1.

In the input mirror array 2-1, N tilt mirrors 2a are arranged in array so that the tilt mirrors correspond to the input collimators 1a of the input collimator array 1 one to one. Namely, in the input mirror array 2-1, the N tilt mirrors 2a are arranged in array so that the N tilt mirrors 2a can reflect up to N collimated beams from the input collimator array 1 to the output mirror array 2-2 in the following stage.

Similarly, in the output mirror array 2-2, N tilt mirrors 2b are arranged in array so that the N tilt mirrors 2b correspond to the tilt mirrors 2a of the input mirror array 2-1 one to one. Namely, in the output mirror array 2-2, the N tilt mirrors are arranged in array so that the N tilt mirrors 2b can reflect up to N reflected beams from the tile mirrors 2a to the output collimator array 3 in the following stage.

In the output collimator array 3, output collimators 3a are arranged in array as N output ports so that the output collimators 3a correspond to the arranged tilt mirrors 2b in the output mirror array 2-2 one to one. The output collimator array 3 collimates up to N reflected beams from the tilt mirrors 2b, and outputs the same.

In FIG. 2, the input mirror array 2-1 and the output mirror array 2-2 are placed an angle of 90 degree away from each other, whereas the input collimator array 1 and the input mirror array 2-1 are placed 45 degree away from each other, and the output mirror array 2-2 and the output collimator array 3 are placed 45 degree away from each other, as well.

Each of the tilt mirrors 2a and 2b of forming the input mirror array 2-1 and the output mirror array 2-2 is a three-dimensional MEMS mirror, a surface direction of which can be individually varied by a driving circuit 8 of the controlling unit 7 to be described later. Whereby, it is possible to deflect, independently and freely, the optical route of each incident light beam from the input collimator array 1 to the output collimator array 3 via the input mirror array 2-1 and the output mirror array 2-2.

The surface direction of each of the tilt mirrors 2a and 2b is controlled so as to control the optical coupling quantity to the output collimator 3a in the collimator array 3, whereby the output optical level of the beam can be adjusted.

In other words, the tilt mirror 2a in the input mirror array 2-1 and the tilt mirror 2b in the output mirror array 2-2, whose surface directions are set, cooperate with each other to be able to switch each input beam to the input collimator array 1 to an output collimator 3a at an arbitrary position in the output collimator array 3 while adjusting the output optical level from the output collimator array 3. Namely, the spatial optical switch can have the VOA function.

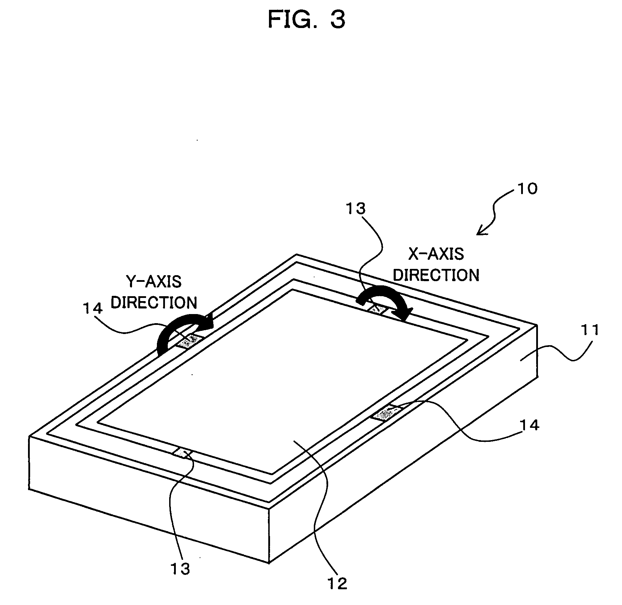

Each of the tilt mirrors 2a and 2b forming the above mirror arrays 2-1 and 2-2 has a micro mirror unit 10 shown in, for example, FIG. 3. In each of the mirror arrays 2-1 and 2-2, the N micro mirror units 10 shown in FIG. 3 are arranged in array. Each of the tilt mirrors 2a and 2b corresponds to a micro mirror 12.

In more detail, the micro mirror unit 10 has the micro mirror 12 inside a fixed frame 11. The micro mirror 12 is rotatably supported in an X-axis direction by a first torsion bar 13 connected to the fixed frame 11, while rotatably supported in a Y-axis direction by a second torsion bar 14 perpendicular to the first torsion bar 13. The surface direction of the micro mirror 12 can be freely changed by a torsional action of the torsion bar 13 or 14 according to an electrostatic force generated by the driving circuit 8.

The optical switching apparatus to which such the micro mirror unit 10 is applied varies the surface direction of the micro mirror 12 by rotating the same about the torsion bar 13 or 14 as being a rotational (deflection) axis by the driving circuit 8, thereby to vary the optical coupling quantity to the optical output port (output optical fiber). Whereby, the output optical level of a beam inputted to the optical switching apparatus can be controlled. As a result, the optical switching apparatus can control to equalize the optical levels of wavelengths of the WDM beam.

In other words, the deflection angle (hereinafter, referred to as mirror angle) of each of the tilt mirrors 12 (that is, the tilt mirrors 2a and 2b) about the torsion bar 13 as being a first deflection axis or the torsion bar 14 as being a second deflection axis of the micro mirror unit 10 is varied by the driving circuit 8. A beam inputted to any one of the input ports (input collimators) 1a can be coupled to any one of the output ports (output collimators) 3a and outputted, and the output optical level thereof can be adjusted. Note that the structure of the micro mirror unit 10 is not limited to the above example.

The coupler unit 4 shown in FIG. 1 branches a part of the output beam outputted from each of the output collimators 3a. The coupler unit 4 is comprised of a plurality of optical couplers 4-1 through 4-N, each of which branches an output beam from each output optical fiber in a fiber block not shown connected to the output collimator array 3 to use the output beam for the feedback control in order to stabilize the optical level thereof.

The optical detector 6 of the controlling apparatus 5 according to this embodiment detects (monitors) the optical level of an output beam (wavelength signal) branched by each of the optical couplers 4-1 through 4-N of the coupler unit 4. The optical detector 6 is comprised of, for example, a photodiode outputting an electric signal (photocurrent; current signal) according to the optical level of each output beam, a current/voltage converter converting the photocurrent into a voltage signal and so forth.

The controlling unit 7 controls the surface direction(s) of the tilt mirror 2a and/or the tilt mirror 2b of the input mirror array 2-1 and/or the output mirror array 2-2, that is, controls the deflection angle(s) of the tilt mirror 2a and/or the tilt mirror 2b about the first deflection axis (torsion bar) 13 or the second defection axis (torsion bar) 14, to control the optical level of each output beam detected by the optical detector 6 to a desired output optical level. According to this embodiment, the controlling unit 7 comprises the driving circuit 8 and a controlling circuit 9, as shown in FIG. 1.

When the driving circuit 8 receives digital control quantities according to target mirror angles of the respective tilt mirror 2a and 2b from the controlling circuit 9 under control of the controlling circuit 9, the driving circuit 8 converts the digital control quantities to analog control quantities (control voltages), supplies the analog control quantities to the respective tilt mirrors 2a and 2b (micro mirrors 12) to deflect the surface directions of the tilt mirrors 2a and 2b to predetermined quantities (angles), respectively.

The controlling circuit 9 controls the driving circuit 8 to control a deflection angle about one deflection axis among four axis, that is, the first deflection axis 13 and the second deflection axis 14 of the tilt mirror 2a and the first deflection axis 13 and the second deflection axis 14 of the tilt mirror 2b. The controlling circuit 9 then controls a deflection angle about another deflection axis other than the former deflection axis, and outputs an input beam from a certain input port 1a to a certain output port 3a. The controlling circuit 9 also controls the driving circuit 8 on the basis of a result of monitoring on each output beam detected by the optical detector 6 on this occasion so that each output beam is at a desired output optical level. The controlling circuit 9 further comprises a rough adjustment unit 9a and a fine adjustment unit 9b (refer to FIG. 1).

The controlling circuit 9 can be comprised of an ASIC (Application Specific Integrated Circuit) such as an FPGA (Field Programmable Gate Arrays) or the like, for example.

The rough adjustment unit 9a controls the driving circuit 8 to control one deflection axis among the above four deflection axes, thereby roughly adjusting the output optical level from the output port 3a so that the output optical level detected by the optical detector 6 falls within the allowable range of a predetermined target level.

After the control by the rough adjustment unit 9a, the fine adjustment unit 9b controls the driving circuit 9 to control a deflection axis differing from the former deflection axis controlled by the rough adjustment unit 9a, thereby to finely adjust the output optical level from the output port 3a so that the optical output level detected by the optical detector 6 is the predetermined target level.

In the controlling circuit 9, the rough adjustment unit 9a controls one deflection axis to deflect the surface direction of the tilt mirror 2a or 2b, thereby adjusting the output optical level of each wavelength outputted from the output port 3a to in the neighborhood of a predetermined target level (within an allowable range). After that, the fine adjustment unit 9b controls another deflection axis differing from the former deflection axis to deflect the surface direction of the tilt mirror 2a or 2b, thereby attenuating the output optical level of each wavelength to the predetermined target level.

### (1.1) Description of Operation (Two Axes Control)

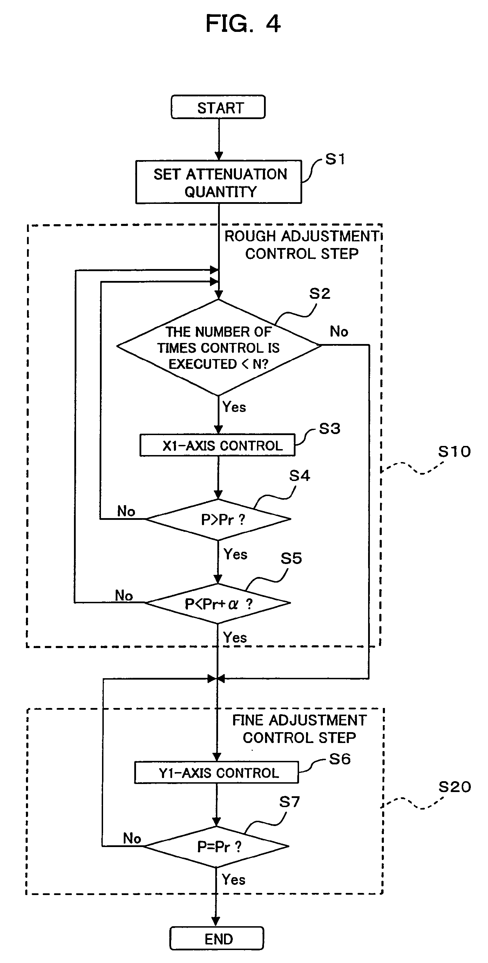

Hereinafter, description will be made of a controlling method for a spatial optical switch according to this embodiment with reference to a flowchart (steps S1 through S7) shown in FIG. 4.

As shown in FIG. 4, in the spatial optical switch controlling method according to this embodiment, the controlling circuit 9 sets a target level Pr for an optical level of an output beam outputted from the output port 3a of the output collimator array 3 and branched by the coupler unit 4, and sets an attenuation quantity of the output optical level to the target level Pr on the basis of monitoring of the output beam by the optical detector 6 (step S1).

First, a control (a first control) by the rough adjustment unit 9a in the controlling circuit 9 is carried out. The rough adjustment unit 9a determines whether the number of times the control is executed up to this time is less than n (n being an integer equal to two or more) (step S2). When the number of times the control is executed is not less than n (when No at step S2), the procedure skips processes at step S3 through S5 to be described later and proceeds to a process at step S6 to be described later. This is a measure to avoid that the deflection control on a deflection axis by the rough adjustment unit 9a is never ended because conditions below are not satisfied. The number of times the deflection control on this deflection axis is carried out is managed by a counter or the like not shown.

When the number of times the deflection control is carried out on the deflection axis is less than n (when Yes at step S2) , the rough adjustment unit 9a controls the driving circuit 8 to control the mirror angle of the tilt mirror 2a on the input's side or the tilt mirror 2b on the output's side about the first deflection axis 13 or the second deflection axis 14 (step S3).

In the case where the deflection angel about the first deflection axis 13 (here, referred to as X1 axis) of the tilt mirror 2a on the input's side from which this output beam is reflected is controlled, for example, the rough adjustment unit 9a controls the driving circuit 8 to control the deflection angle of the tilt mirror 2a about the X1 axis, deflects the surface direction of the tilt mirror 2a, deflects the optical path of the output beam, and attenuates the optical level of the output beam.

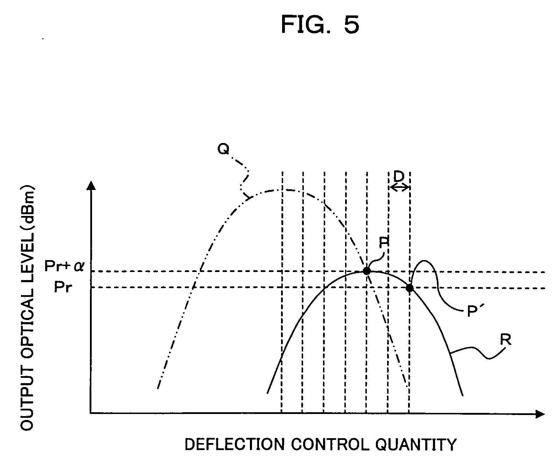

The rough adjustment unit 9a determines whether or not the output optical level P (refer to FIG. 5) detected by the optical detector 6 is higher than the target level Pr (P > Pr) (step S4 ) . When the output optical level P is not higher than the target level Pr (when No at step S4) , the procedure returns to the processes at and after the above step S2, and the mirror angle control on the same X1 axis is again executed unless the number of times the control is executed reaches n.

When the output optical level is higher than the target level Pr (when Yes at step S4 ) , the rough adjustment unit 9a determines whether or not the current output optical level P detected by the optical detector 6 is smaller than a value obtained by adding a predetermined value (allowed value) α (provided α >0) to the target level Pr, that is, whether or not the current output optical level P falls within a range of the allowed value α of the target level Pr (step S5) .

When the current output optical level P is not within a range of the allowed value α of the target level Pr (when No at step S5), the procedure returns to the process at the above step S2, and the rough adjustment unit 9a continues the mirror angle control on the same X1 axis unless the number of times the control is executed reaches n.

When the current output optical level P is within a range of the allowed value α of the target level Pr (when Yes at step S5) , the rough adjustment unit 9a terminates (stops) the process (mirror angle control on the X1 axis).

The above steps S2 to S5 together function as a rough adjustment controlling step (a first controlling step) S10 wherein the rough adjustment unit 9a adaptively controls the mirror angle of the X1 axis so that the current output optical level detected by the optical detector 6 falls within a range of the allowed value α of the predetermined target level Pr (Pr < P < Pr+ α).

Here, attention is given to a relationship between the output optical level and the deflection angle (that is, the deflection control quantity of the tilt mirror 2a) of a deflection axis at the time of such control. As shown in FIG. 5, for example, the rough adjustment unit 9a controls the deflection angle of the X1 axis at the rough adjustment controlling step S10 (namely, controlling the deflection angle about the X1 axis at the minimum resolution, thereby to control the deflection control quantity of the tilt mirror 2a at the minimum resolution D), whereby the output optical level P is changed and attenuated alog a curve of the Gaussian distribution characteristic depicted at a dash two-dot chain Q so that the current output optical level P detected by the optical detector 6 is larger than the target level Pr and lower than a level obtained by adding the predetermined value α to the target level Pr, that is, so that Pr < P < Pr+α is established. Incidentally, as shown in Fig. 5 and Fig. 9, since the curve of the Gaussian distribution characteristic representing a relationship between the deflection angle and the output optical level is symmetric with respect to a vertical line which intersects at a point where the output optical level is the maximum, a direction in which the deflection angle is shifted may be any one of the two directions.

Next, a control (a second control) by the fine adjustment unit 9b in the controlling circuit 9 is carried out. The fine adjustment unit 9b controls the driving circuit 8 to control the deflection angle about a deflection axis differing from the X1 axis, that is, the second deflection axis 14 (here, referred to as Y1 axis) of the tilt mirror 2a on the same input' s side, for example (step S6). Namely, the fine adjustment unit 9b controls the driving circuit 8 to control the deflection angle of the Y1 axis, deflects the surface direction of the tilt mirror 2a, and further attenuates the output optical level P which has been attenuated to the predetermined range at the rough adjustment controlling step S10 to the target level Pr.

The fine adjustment unit 9b determines whether or not the current output optical level P detected by the optical detector 6 after the Y1 axis control at the above step S6 is equal to the target level Pr (step S7 ) . When the current output optical level P is not equal to the target level Pr (when No at step S7) , the fine adjustment unit 9b again executes the process at the above step S6 (mirror angle control about the Y1 axis) until it is determined that the current output optical level P is equal to the target level Pr (that is, until it is determined Yes at step S7). At the point of time that the current output optical level P becomes equal to the target level Pr, the mirror angle control about the Y1 axis is terminated.

The deflection control on the Y1 axis signifies that the output optical level P, which has been varied (attenuated) to the point P along the curve of the Gaussian distribution characteristic with respect to the X1 axis shown in FIG. 5 under the deflection control on the X1 axis, is further varied (attenuated) to the point P' along a portion of a curve (gentle-curved portion) of the Gaussian distribution characteristic with respect to Y1 axis (refer to a solid line R in FIG. 5), in which the sensitivity of the output optical level change to the deflection control is low.

The above steps S6 and S7 together function as a fine adjustment controlling step (a second controlling step) S20 of carrying out the deflection control on the Y1 axis (that is, controlling the deflection angle about the Y1 axis at the minimum resolution, thereby to control the deflection control quantity of the tilt mirror 2a at the minimum resolution D) to control the output optical level at a high resolution using a portion of the curve of the Gaussian distribution characteristic R with respect to the Y1 axis in which the sensitivity of output optical level change to the deflection control is low so that the current output optical level P detected by the optical detector 6 is the predetermined target level Pr.

The above controlling method is completed by carrying out the processes at the above steps S1 through S7 (steps S1, S10 and S20) on each output beam at a wavelength that needs to be attenuated.

According to the embodiment of this invention, the rough adjustment unit 9a of the controlling unit 9 controls the driving circuit 8, deflects the deflection angle of the X1 axis, deflects the surface direction of the tilt mirror 2a, and controls the output optical level P so that the current output optical level P falls within a range (here, Pr < P < Pr+α ) of the allowable value α of the target level Pr (rough adjustment controlling step S10). After that, the fine adjustment unit 9b of the controlling unit 9 controls the driving circuit 8, deflects the deflection angle of the Y1 axis differing from the X1 axis, further deflects the surface direction of the tilt mirror 2a, and controls the output optical level P at a high resolution using a gentle-curved of the Gaussian distribution with respect to the Y1 axis so that the current output optical level P is the target level Pr (fine adjustment controlling step S20).

Therefore, it is possible to attenuate the output optical level at a minute resolution (for example, 0.1 (dB)), and control the output optical level at each wavelength to the target level with high precision.

### (1.2) Modification (Three Axes Control)

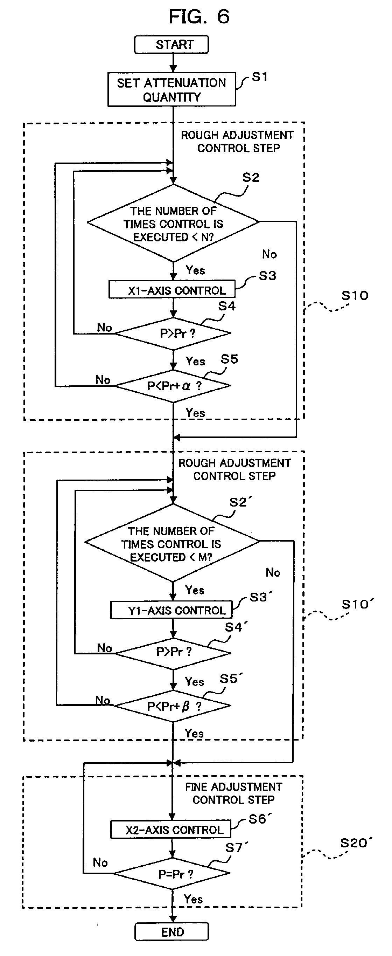

In the above embodiment, the deflection axis controlled by the rough adjustment unit 9a is the first deflection axis (X1 axis) 13 of the tilt mirror 2a, whereas the deflection axis controlled by the fine adjustment unit 9b is the second deflection axis (Y1 axis) 14 of the tilt mirror 2a. However, so long as axes controlled by the rough adjustment unit 9a and the fine adjustment unit 9b differ from each other, the rough adjustment unit 9a and the fine adjustment unit 9b may control any axes among the four deflection axes of the tilt mirrors 2a and 2b. Now, description will be made of an example where three deflection axes are controlled with reference to a flowchart shown in FIG. 6, for example.

FIG. 6 is a flowchart (steps S1 through S5 and S2' through S7') for illustrating a controlling method for a spatial optical switch (three axes control) according to a modification of this invention. As shown in FIG. 6, it is alternatively possible, in the controlling unit 9, that the rough adjustment unit 9a controls the X1 axis like the above first embodiment, then controls the Y1 axis differing from the X1 axis, after that, the fine adjustment unit 9b controls the first deflection axis 13 (hereinafter referred to as X2 axis) of the tilt mirror 2b on the output's side differing from both the X1 axis and the Y1 axis.

Like the above-described embodiment, the rough adjustment unit 9a controls the X1 axis (rough adjustment controlling step S10) , after that, carries out the mirror angle control on a deflection axis differing from the X1 axis, that is, the Y1 axis, for example. The rough adjustment unit 9a first determines whether the number of times the control is executed up to this time is less than m (m being an integer equal to two or more, which may be m=n or m ≠n) (step S2' ) . When the number of times the control is executed is not less than m (when No at step S2' ) , the procedure skips processes at steps S3' through S5' to be described later, and proceeds to a process at step S6' to be described later.

When the number of times the deflection control is carried out on the above deflection axis (Y1 axis) is less than m (when Yes at step S2' ) , the rough adjustment unit 9 controls the driving circuit 8, controls the deflection angle of the tilt mirror about the Y1 axis, deflects the surface direction of the tilt mirror 2a, deflects the optical path of the output beam, and attenuates the optical level of the output beam (step S3').

The rough adjustment unit 9a determines whether or not the current output optical level P detected by the optical detector 6 is higher than the target level Pr (P > Pr) (step S4' ) . When the output optical level P is not higher than the target level Pr (when No at step S4' ) , the procedure returns to the processes at and after the above step S2', and the rough adjustment unit 9a again executes the mirror angle control on the same Y1 axis unless the number of times the control is executed reaches the predetermined number m.

When the current output optical level P is higher than the target level Pr (When Yes at step S4'), the rough adjustment unit 9a further determines whether or not the current output optical level P detected by the optical detector 6 is smaller than a value obtained by adding a predetermined value (allowed value) *β* (provided 0<*β*<α) to the target level Pr, that is, whether or not the current output optical level P is within a range of the allowed value *β* of the target level Pr (step S5').

When the current output optical level P is not within a range of the allowed value *β* of the target level Pr (when No at step S5' ) , the procedure returns to the process at the above step S2' , and the rough adjustment unit 9a continues the mirror angle control on the same Y1 axis unless the number of times the control is executed reaches the predetermined number m.

When the current output optical level P is within a range of the allowed value *β* of the target level Pr (when Yes at step S5' ) , the rough adjustment unit 9a terminates (stops) the process (mirror angle control on the Y1 axis).

The above steps S2' through S5' together function as a rough adjustment controlling step S10' at which the rough adjustment unit 9a adaptively controls the mirror angle of the Y1 axis so that the current output optical level P detected by the optical detector 6 is within a range (Pr < P < Pr+ *β*) of the allowed value *β* of the target level Pr.

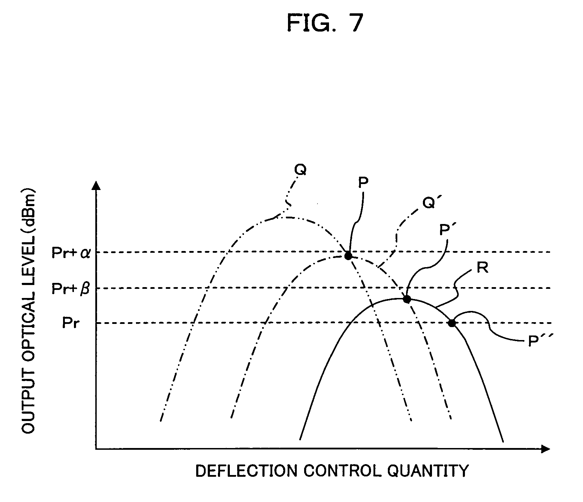

Here, attention is given to a relationship between the output optical level and the deflection angle of the deflection axis (that is, deflection control quantity of the tilt mirrors 2a and 2b) at the time of such control. As shown in FIG. 7, for example, the rough adjustment unit 9a controls the deflection angle of the Y1 axis to further vary the output optical level P, which has been varied (attenuated) to the point P along the curve of the Gaussian distribution characteristic Q with respect to the X1 axis shown in FIG. 7 under the deflection control on the above X1 axis, along the curve of the Gaussian distribution characteristic depicted at a dash dot chain Q' shown in FIG. 7, thereby attenuating the output optical level P to a point P' so that the output optical level P is larger than the target level Pr and lower than a level obtained by adding a predetermined value *β* to the target level Pr, that is, so that Pr < P < Pr+ *β* is established.

Next, the fine adjustment unit 9b controls the driving circuit 8 to control the deflection angle about a deflection axis differing from both the above X1 axis and Y1 axis, that is, the second deflection axis 13 (here, X2 axis) of the tilt mirror 2b on the output's side, for example (step S6' ) . In other words, the fine adjustment unit 9b controls the driving circuit 8, controls the deflection angle of the X2 axis, deflects the surface direction of the tilt mirror 2b, and attenuates the output optical level P attenuated to a predetermined range (point P' in FIG. 7) at the rough adjustment control step S10' to the target level Pr.

As shown in FIG. 6, the fine adjustment unit 9b determines whether or not the current output optical level P is equal to the target level Pr (step S7' ) . When the current output optical level P is not equal to the target level Pr (when No at step S7'), the fine adjustment unit 9b again carries out the process (mirror angle control about the X2 axis) at the above step S6' until the current output optical level P becomes equal to the target level Pr (until it is determined Yes at step S7'). The fine adjustment unit 9b terminates the mirror angle control about the X2 axis at the point of time that the current output optical level P becomes equal to the target level Pr.

The deflection control on the X2 axis signifies that the output optical level P, which has been changed (attenuated) to the point P' along the curve of the Gaussian distribution characteristic Q' with respect to the Y1 axis shown in FIG. 7 under the deflection control on the Y1 axis, is further varied (attenuated) to a point P" along a portion of the Gaussian distribution characteristic (refer to a solid line R in FIG. 7) with respect to the X2 axis, in which the sensitivity of the output optical level change to the deflection control is low.

The above steps S6' and S7' together function as a fine adjustment controlling step (a second controlling step) S20' of performing the deflection control on the X2 axis to control the output optical level by using a portion of the Gaussian distribution characteristic R with respect to the X2 axis, in which the sensitivity of the output optical level change to the deflection control is low, so that the current output optical level P detected by the optical detector 6 is equal to the predetermined target level Pr.

Accordingly, this modification can not only provide the same working functions and effects as the above embodiment, but also adjust the output optical level at a fine resolution in a wider range than that in the above embodiment. The rough adjustment unit 9a controls different deflection axes (here, X1 axis and Y1 axis), carries out the two-stage mirror angle control (rough adjustment controlling steps S10 and S10'), thereby attenuating the output optical level P to a smaller allowable range of the target level Pr than that of the two axes control described above. The fine adjustment unit 9b can thereby attenuate the output optical level P at a higher resolution using a portion in which the sensitivity of the output optical level change to the deflection control (here, deflection control on the X2 axis) is low in the fine adjustment controlling step S20'. As a result, it becomes possible to attain the target level Pr with higher precision.

### [2] Others

Note that the present invention is not limited to the above examples, but may be modified in various ways without departing from the scope of the invention.

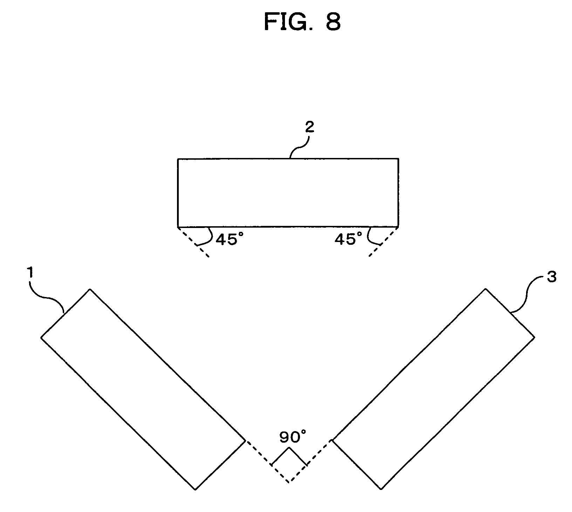

In the above examples, the mirror array as being a deflecting means is applied to a spatial optical switch having a plurality of mirror arrays 2-1 and 2-2. However, this invention is not limited to this. The spatial optical switch may have an input collimator array 1, a mirror array 2 and an output mirror array 3 in an arrangement shown in FIG. 8, for example.

In more detail, one mirror array 2 is provided as the deflection means, the input collimator 1 is placed at a right angle to the output collimator array 3, and the mirror array 1 is placed at an angle of 45 degree to both the input collimator array 1 and the output collimator array 3. The mirror array 2 is similar in structure to the input mirror array 2-1 or the output mirror array 2-2.

In which case, the mirror deflection control may be carried out on each of different deflection axes of each tilt mirror of the mirror array 2 in order to control the output optical level at a high resolution like the above examples.

The present invention requires only that the mirror array as being a deflecting means is comprised of a micro mirror unit having a plurality of deflection axes for deflecting the surface direction of the micro mirror (tilt mirror) with different characteristics.

In the above examples, each of the input mirror array 2-1 and the output mirror array 2-2 is formed by arranging N micro mirror units shown in FIG. 3 in array. The present invention is not limited to this. The micro mirror unit may have three or more deflection axes for deflecting the surface direction of the micro mirror 12 with different characteristics.

When a plurality of mirror arrays are provided as the deflecting means, a micro mirror array having only one deflecting axis may be employed. In which case, the same working functions and effects can be provided by controlling deflecting axes of different micro mirror units in order.

In the above examples, the descriptions have been made by way of a two axes control and a three axes control. However, all four axes may be controlled. When different deflection axes are controlled in order, the order in which the deflection axes are controlled is arbitrary. For example, either one of different deflection axes of the same tilt mirror may be controlled first, or the deflection axis of either one of different tilt mirrors (on the input' s side and the output's side) may be controlled first.

## Claims

1. A controlling apparatus (5) for a spatial optical switch comprising a deflecting means (2) which has not less than two deflection axes (13,14), and controls deflection angles about said deflection axes (13, 14) to deflect an optical path of an input light beam from any one of a plurality of input ports (1a) between said plural input ports (1a) and a plurality of output ports (3a), and outputs said input light beam to any one of said plural output ports (3a), said controlling apparatus (5) comprising:
an optical detecting means (6) for detecting an output optical level from said output port (3a); and
a controlling means (7) for controlling said output optical level detected by said optical detecting means (6) to be a desired output optical level by executing a first controlling of a deflection angle about one of said deflection axes of said deflecting means (2) and a second controlling of a deflection angle about another deflection axis of said deflecting means (2) after the first controlling.

2. A controlling apparatus (5) for a spatial optical switch comprising a plurality of deflecting means (2) each of which has not less than one deflection axis (13,14), and controls deflection angles about said deflection axes (13,14) of said plural deflecting means (2) to deflect an optical path of an input light beam from any one of a plurality of input ports (1a) between said plural input ports (1a) and a plurality of output ports (3a) and outputs said input light beam to any one of said plural output ports (3a), said controlling apparatus comprising:
an optical detecting means (6) for detecting an output optical level from said output port (3a); and
a controlling means (7) for controlling said output optical level detected by said optical detecting means (6) to be a desired output optical level by executing a first controlling of a deflection angle about a deflection axis of any one of said plural deflecting means (2), and a second controlling of a deflection angle about another deflection axis other than the former deflection axis after the first controlling.

3. The controlling apparatus for a spatial optical switch according to claim 1 or 2, wherein said controlling means comprises:
a rough adjustment unit (9a) for controlling the former deflection axis so that said output optical level detected by said optical detecting means (6) is within an allowable range of a predetermined target level; and
a fine adjustment unit (9b) for controlling the latter deflection axis after the control by said rough adjustment unit (9a) so that said output optical level detected by said optical detecting means (6) is said target level.

4. The controlling apparatus for a spatial optical switch according to claim 1 or 2, wherein said deflecting means (2) comprises a tilt mirror (2a,2b) having rotation axes perpendicular to each other as said deflection axes (13,14).

5. A method for controlling a spatial optical switch comprising a deflecting means (2) which has not less than two deflection axes (13,14), and controls deflection angles about said deflection axes (13,14) to deflect an optical path of an input light beam from any one of a plurality of input ports (1a) between said plural input ports (1a) and a plurality of output ports (3a), and outputs said input light beam to any one of said plural output ports (3a) , said method comprising the steps of:
firstly controlling a deflection angle about one of said deflection axes of said deflecting means (2); and
secondly controlling a deflection angle about another deflection axis of said deflecting means (2),
an output optical level outputted from said output port (3a) being thereby controlled to a desired output optical level.

6. A method for controlling a spatial optical switch comprising a plurality of deflecting means (2) each of which has not less than one deflection axis (13,14) and controls deflection angles about said deflection axes (13,14) of said plural deflecting means (2) to deflect an optical path of an input light beam from any one of a plurality of input ports (1a) between said plural input ports (1a) and a plurality of output ports (3a) and outputs said input light beam to any one of said plural output ports (3a), said method comprising the steps of:
firstly controlling a deflection angle about a deflection axis of any one of said deflecting means (2); and
secondly controlling a deflection angle about another deflection axis other than the former deflection axis,
an output optical level outputted from said output port (3a) being thereby controlled to a desired output optical level.

7. The method for controlling a spatial optical switch according to claim 5 or 6, wherein a rough adjustment control is executed on the former deflection axis so that said output optical level is within an allowable range of a predetermined target level, a fine adjustment control is then executed on the latter deflection axis so that said output optical level is said target level.
